# EUROPÄISCHE PATENTSCHRIFT

(11) **EP 3 000 566 B1**
(45) Veröffentlichungstag und Bekanntmachung des Hinweises auf die Patenterteilung: **19.06.2019**
(21) Anmeldenummer: 15178789.2
(22) Anmeldetag: 29.07.2015
(51) Int. Cl.: B25J 15/02, B25J 15/10

(54) **GREIFVORRICHTUNG**
GRIPPING DEVICE
DISPOSITIF DE PRISE

(30) Priorität: 24.09.2014 DE 102014014105
(43) Veröffentlichungstag der Anmeldung: 30.03.2016
(73) Patentinhaber: FESTO AG & Co. KG, 73734 Esslingen (DE)
(72) Erfinder: Bauer, Mario, 73235 Weilheim/Teck (DE); Ling, Jürgen, 71679 Asperg (DE)
(74) Vertreter: Patentanwälte Magenbauer & Kollegen Partnerschaft mbB

(56) Entgegenhaltungen:
- JP-A- H08 192 923
- US-A1- 2013 249 229

## Beschreibung

Die Erfindung betrifft eine Greifvorrichtung, mit einem Greifbackenträger und mehreren daran um eine Hauptachse des Greifbackenträgers herum verteilt angeordneten Greifbacken, wobei mindestens eine der Greifbacken eine an dem Greifbackenträger um eine Schwenkachse verschwenkbar gelagerte schwenkbewegliche Greifbacke ist, die einen einseitig von der Schwenkachse wegragenden, mit einer zum Greifen eines Gegenstandes dienenden Greiffläche versehenen Greifarm aufweist, der bei einer Schließ-Schwenkbewegung der Greifbacke nach radial innen in Richtung zu der Hauptachse des Greifbackenträgers und bei einer entgegengesetzten Öffnungs-Schwenkbewegung der Greifbacke von der Hauptachse weg nach radial außen verschwenkt wird, und mit einem Betätigungsschieber zur Betätigung jeder schwenkbeweglichen Greifbacke, der unter Ausführung einer Schließ-Betätigungsbewegung und einer diesbezüglich entgegengesetzten Öffnungs-Betätigungsbewegung jeweils relativ zu dem Greifbackenträger in Achsrichtung der Hauptachse linear verschiebbar ist und der für jede schwenkbewegliche Greifbacke eine Schließ-Antriebsfläche aufweist, die bei seiner Schließ-Betätigungsbewegung an einer bezüglich der Hauptachse des Greifbackenträgers geneigten Schließ-Kooperationsfläche der zugeordneten schwenkbeweglichen Greifbacke entlanggleitet und dadurch deren Schließ-Schwenkbewegung hervorruft, wobei die Schließ-Kooperationsfläche von der Hauptachse wegweisend an der von der Hauptachse radial abgewandten Außenfläche des Greifarmes einer jeweiligen schwenkbeweglichen Greifbacke angeordnet ist und der Greifarm an seiner Außenfläche von einem an seiner der Hauptachse zugewandten Innenseite die jeweilige Schließ-Antriebsfläche aufweisenden Betätigungsabschnitt des Betätigungsschiebers in Achsrichtung der Hauptachse übergriffen wird.

Eine aus der DE 69000218 T2 bekannte Greifvorrichtung enthält mehrere schwenkbeweglich an einem Greifbackenträger angeordnete Greifbacken, die jeweils einen in einer Richtung von der Schwenkachse wegragenden Greifarm und einen in einer entgegengesetzten Richtung von der Schwenkachse wegragenden Betätigungsarm aufweisen. In dem Greifbackenträger ist ein pneumatisch betätigbarer Betätigungsschieber linear verschiebbar gelagert, der für jede Greifbacke ein zylindrisches Betätigungselement aufweist, das in einen Schlitz des Betätigungsarms der zugeordneten Greifbacke eingreift. Der Schlitz fungiert als eine Kulissenführung für das Betätigungselement und hat einen bezüglich der axialen Hauptachse des Greifbackenträgers geneigten Längsverlauf. Eine Linearbewegung des Betätigungsschiebers hat zur Folge, dass die Betätigungselemente auf die Flanken der Schlitze der Betätigungsarme einwirken und eine Schwenkbewegung der betreffenden Greifbacke hervorrufen, bei der es sich je nach Bewegungsrichtung des Betätigungsschiebers um eine nach radial innen orientierte Schließ-Schwenkbewegung oder um eine nach radial außen orientierte Öffnungs-Schwenkbewegung handelt. Die bekannte Greifvorrichtung hat einen relativ komplexen Aufbau mit relativ hohem Gewicht und relativ großen Abmessungen.

Aus der US-A-2013 249229 ist eine Greifvorrichtung nach dem Oberbegriff des Anspruches 1 bekannt, die mehrere verschwenkbar gelagerte Greifbackenträger aufweist, die jeweils durch ein an ihrer Außenfläche abgleitendes Beaufschlagungsglied zu einer aufeinander zu gerichteten Schließ-Schwenkbewegung antreibbar sind.

Die JP-A-08192923 beschreibt eine Transportvorrichtung für Behälter, die mehrere schwenkbar gelagerte Klauen aufweist, die durch ein auf ihre Außenfläche einwirkendes, linear bewegbares Betätigungselement zu einer nach innen gerichteten und dadurch einen Behälter festhaltenden Schwenkbewegung antreibbar sind.

Der Erfindung liegt die Aufgabe zugrunde, eine Greifvorrichtung zu schaffen, die einen kostengünstigen, kompakten und gewichtssparenden Aufbau ermöglicht.

Zur Lösung dieser Aufgabe ist in Verbindung mit den eingangs genannten Merkmalen vorgesehen, dass an der der Hauptachse zugewandten Innenfläche jedes schwenkbeweglichen Greifarmes eine bezüglich der Hauptachse geneigte Öffnungs-Kooperationsfläche angeordnet ist, der mit Bezug zur Hauptachse radial innen eine am Betätigungsschieber angeordnete und nach radial außen weisende Öffnungs-Antriebsfläche gegenüberliegt, die bei der Öffnungs-Betätigungsbewegung des Betätigungsschiebers an der Öffnungs-Kooperationsfläche des zugeordneten schwenkbeweglichen Greifarmes entlanggleitet und dadurch dessen Öffnungs-Schwenkbewegung hervorruft.

Auf diese Weise befindet sich die zum Hervorrufen der Schließ-Schwenkbewegung vom Betätigungsschieber beaufschlagte Schließ-Kooperationsfläche an der von der Hauptachse abgewandten Außenfläche des Greifarmes, sodass die Greifbacke sehr kostengünstig und mit kompakten Abmessungen herstellbar ist. Es erübrigt sich zum einen ein aufwendig herzustellender Kulissenführungsschlitz und zum anderen auch ein spezieller, zusätzlich zum Greifarm vorgesehener Betätigungsarm. Da der Greifarm nur einseitig von der Schwenkachse wegragt, kann die Greifbacke insgesamt mit kurzer Baulänge realisiert werden, was kompakte Abmessungen der gesamten Greifvorrichtung ermöglicht. Das Schwenkverhalten der mindestens einen schwenkbeweglichen Greifbacke lässt sich sehr einfach durch die Gestaltung der Schließ-Kooperationsfläche beeinflussen, indem beispielsweise deren Neigung bezüglich der Hauptachse nach Bedarf gewählt wird oder auch wahlweise ein linearer oder auch zumindest partiell nichtlinearer Längsverlauf der Schließ-Kooperationsfläche vorgesehen wird. Der Greifarm jeder schwenkbeweglichen Greifbacke wird an der der Hauptachse abgewandten Außenseite von einem Betätigungsabschnitt des Betätigungsschiebers axial übergriffen bzw. axial überlappt, der an seiner Innenseite für jede schwenkbewegliche Greifbacke eine Schließ-Antriebsfläche aufweist, die bei der Linearbewegung des Betätigungsschiebers an der zugeordneten Schließ-Kooperationsfläche abgleiten kann, um die Schwenkbewegung jeder schwenkbaren Greifbacke hervorzurufen. Außerdem verfügt jeder schwenkbewegliche Greifarm an der der Hauptachse zugewandten Innenfläche über eine Öffnungs-Kooperationsfläche, der an der der Hauptachse zugewandten Innenseite eine am Betätigungsschieber angeordnete und nach radial außen weisende Öffnungs-Antriebsfläche gegenüberliegt, die bei der Öffnungs-Betätigungsbewegung des Betätigungsschiebers an der Öffnungs-Kooperationsfläche entlanggleitet und dadurch die Öffnungs-Schwenkbewegung des zugeordneten Greifarmes hervorruft. Die Öffnungs-Kooperationsfläche ist bezüglich der Hauptachse des Greifbackenträgers geneigt. Auf diese Weise kann sowohl die Schließ-Schwenkbewegung als auch die Öffnungs-Schwenkbewegung jeder schwenkbeweglichen Greifbacke aktiv durch eine Betätigungsbewegung des zugeordneten Betätigungsschiebers hervorgerufen und gesteuert werden.

Vorteilhafte Weiterbildungen der Erfindung gehen aus den Unteransprüchen hervor.

Die Greifvorrichtung kann prinzipiell so ausgeführt sein, dass sie über nur eine einzige schwenkbewegliche Greifbacke verfügt und darüber hinaus beispielsweise mit einer oder mehreren starren Greifbacken ausgestattet ist. Es ist jedoch vorteilhaft, wenn die Greifvorrichtung über mehrere schwenkbewegliche Greifbacken verfügt und wenn insbesondere sämtliche vorhandenen Greifbacken als schwenkbewegliche Greifbacken ausgebildet sind, die alle gemeinsam und synchron mittels des Betätigungsschiebers betätigbar, also hinsichtlich der Schließ-Schwenkbewegung und der Öffnungs-Schwenkbewegung steuerbar sind.

Die Greifvorrichtung kann beispielsweise zwei oder drei schwenkbare Greifbacken aufweisen. Möglich ist aber auch eine Realisierung mit einer wesentlich größeren Anzahl von Greifbacken, wobei eine umso größere Anzahl von Greifbacken vorhanden sein kann, je schmäler die einzelnen Greifbacken ausgeführt sind. Enthält die Greifvorrichtung eine Vielzahl relativ schmaler schwenkbeweglicher Greifbacken, können Gegenstände besonders sicher ergriffen werden, vor allem auch Gegenstände mit unregelmäßiger Oberfläche.

Grundsätzlich besteht bei der erfindungsgemäßen Greifvorrichtung die Möglichkeit, die Greifbacken mit unterschiedlicher Form, Anzahl, Position und Größe zu realisieren. Ebenso sind Greifbacken denkbar, die zusätzlich auch noch über Schnittstellen für wechselbare Greifaufsätze verfügen.

Sämtliche Greifbacken sind zweckmäßigerweise mit untereinander gleichem radialem Abstand zu der Hauptachse um die Hauptachse herum verteilt angeordnet. Es handelt sich insbesondere um eine gleichmäßige Verteilung.

Vorzugsweise verläuft die Schwenkachse jeder schwenkbeweglichen Greifbacke in einer zu der Hauptachse rechtwinkeligen Radialebene. Es ist vorteilhaft, wenn die Schwenkachsen sämtlicher schwenkbeweglichen Greifbacken in ein und derselben solchen Radialebene angeordnet sind und mithin bezogen auf die Achsrichtung der Hauptachse auf gleicher axialer Höhe liegen.

Zweckmäßigerweise verläuft die Schwenkachse jeder schwenkbeweglichen Greifbacke rechtwinkelig zu einer Geraden, die in der genannten Radialebene rechtwinkelig zur Hauptachse ausgerichtet ist.

Die Schließ-Kooperationsfläche befindet sich zweckmäßigerweise in einem Bereich an der Außenfläche des Greifarmes, der zu der Schwenkachse benachbart ist. Bezogen auf die axiale Länge des Greifarmes befindet sich die Schließ-Kooperationsfläche zweckmäßigerweise im Bereich der sich an die Schwenkachse anschließenden ersten Längenhälfte des Greifarmes.

Als besonders vorteilhaft wird es angesehen, wenn die Schließ-Kooperationsfläche konvex gewölbt ist und folglich in der Achsrichtung der Hauptachse über einen konvex gekrümmten Längsverlauf verfügt. Auf diese Weise lassen sich ein optimales Bewegungsverhalten der schwenkbeweglichen Greifbacke und insbesondere auch eine optimale Kraftübertragung zwischen dem Betätigungsschieber und dem Greifarm jeder schwenkbeweglichen Greifbacke realisieren.

Vorzugsweise ist die Greifvorrichtung ausgebildet, um einen Gegenstand außen zu ergreifen. Der zu ergreifende Gegenstand wird dabei zwischen den Greifbacken der Greifvorrichtung platziert. Jeder Greifarm verfügt dabei an der der Hauptachse zugewandten Innenfläche über eine dem Anwendungsfall entsprechend konturierte Greiffläche, die vorzugsweise konkav geformt ist, sodass sich vor allem solche Gegenstände gut ergreifen lassen, die über eine konvexe Außenkontur verfügen, was beispielsweise für viele Arten von Früchten und Gemüse zutrifft.

Es besteht allerdings auch die Möglichkeit, zusätzlich oder alternativ mindestens eine Greiffläche an der der Hauptachse abgewandten Außenfläche des Greifarmes der schwenkbeweglichen Greifbacke anzuordnen. Eine solche Ausgestaltung ermöglicht ein Innengreifen von Gegenständen, die über einen Hohlraum verfügen, in den die Greifbacken mit ihren Greifarmen eintauchen können.

Wird die Greifvorrichtung zum Außengreifen eines Gegenstandes eingesetzt, fungiert die Schließ-Schwenkbewegung der Greifbacken als Greifbewegung und die Öffnungs-Schwenkbewegung als Freigabebewegung. Wird die Greifvorrichtung zum Innengreifen von Gegenständen genutzt, fungiert die Öffnungs-Schwenkbewegung als Greifbewegung und bei der Schließ-Schwenkbewegung handelt es sich um die Freigabebewegung.

Vorzugsweise erstrecken sich die Greifarme der schwenkbeweglichen Greifbacken mit einer axialen Erstreckungskomponente von der jeweils zugeordneten Schwenkachse weg in Richtung zu einer axialen Vorderseite der Greifvorrichtung, wobei der Betätigungsabschnitt des Betätigungsschiebers die Form eines Ringes oder Rahmens haben kann und alle schwenkbeweglichen Greifarme gemeinsam an ihrer Außenfläche umschließt beziehungsweise umrahmt und dabei auch ein Stückweit axial übergreift. Es besteht die vorteilhafte Möglichkeit, den Betätigungsschieber an seinem vorderen Endbereich mit einem becherförmigen Endabschnitt zu versehen, der den Betätigungsabschnitt bildet.

Der Betätigungsschieber ist insgesamt zweckmäßigerweise hülsenförmig ausgebildet, wobei er den Greifbackenträger mit axialer Beweglichkeit koaxial umschließt. Der Betätigungsschieber ist auf dem Greifbackenträger zweckmäßigerweise in Achsrichtung der Hauptachse linear verschiebbar geführt.

Die Öffnungs-Kooperationsfläche ist in Achsrichtung der Hauptachse des Greifbackenträgers zweckmäßigerweise konkav gewölbt.

Vorzugsweise durchsetzt jeder Greifarm einen Antriebsschlitz des Betätigungsschiebers, der zwei sich mit Abstand gegenüberliegende Schlitzflanken aufweist, von denen die eine die Schließ-Antriebsfläche und die andere die Öffnungs-Antriebsfläche bildet. Zweckmäßigerweise ist jeder schwenkbeweglichen Greifbacke ein eigener derartiger Antriebsschlitz zugeordnet.

Bei einer zweckmäßigen Ausgestaltung der Greifvorrichtung verfügt der Betätigungsschieber über einen jede Schließ-Antriebsfläche aufweisenden Hauptkörper und außerdem pro schwenkbeweglicher Greifbacke über ein an diesem Hauptkörper fixiertes Ösenelement, an dem die zugeordnete Öffnungs-Antriebsfläche ausgebildet ist. Das Ösenelement kann dabei gemeinsam mit dem Hauptkörper einen jeweiligen Antriebsschlitz der weiter oben beschriebenen Art definieren.

Das Ösenelement ist zweckmäßigerweise von einem länglichen, bevorzugt federelastisch biegbaren Ringkörper gebildet, der zur Vereinfachung der Montage an einer Stelle unterbrochen sein kann.

Jede schwenkbewegliche Greifbacke ist zweckmäßigerweise einstückig ausgebildet und besteht vorzugsweise durchweg aus dem gleichen Material. Auf diese Weise ist eine besonders kostengünstige Herstellung möglich. Außerdem können, beispielsweise durch Spritzgießen oder mittels generativer Fertigungsverfahren, sehr einfach und kostengünstig die unterschiedlichsten Formgebungen der Greifbacken verwirklicht werden. Besonders vorteilhaft ist es, wenn die schwenkbewegliche Greifbacke im Bereich ihres Greifarmes über eine in Längsrichtung bogenförmig gewölbte Formgebung verfügt.

Greifvorrichtungen mit unterschiedlicher Anzahl von schwenkbeweglichen Greifbacken lassen sich besonders kostengünstig realisieren, wenn die schwenkbeweglichen Greifbacken individuelle, gesondert voneinander ausgebildete Elemente sind. Somit kann dann jede Greifvorrichtung sehr einfach mit jeder beliebigen Anzahl von schwenkbeweglichen Greifbacken ausgestattet werden.

Es besteht allerdings auch die Möglichkeit, alle schwenkbeweglichen Greifbacken zu einer einstückigen Greifbackeneinheit zusammenzufassen, wobei die Verbindung zwischen den einzelnen Greifbacken dann zweckmäßigerweise über einen ringförmig in sich geschlossenen Strangkörper realisiert wird, der die Schwenkachskörper der einzelnen Greifbacken bildet. Die Schwenkachskörper bestehen hier aus ineinander übergehenden Längenabschnitten des Strangkörpers, wobei die Schwenkbeweglichkeit insbesondere dadurch gewährleistet ist, dass dieser Strangkörper tordierbar ist.

Es ist weiterhin vorteilhaft, wenn die Greifvorrichtung mit einer Antriebseinrichtung ausgestattet ist, mit der sich die lineare Betätigungsbewegung des Betätigungsschiebers hervorrufen lässt. Diese Antriebseinrichtung kann beispielsweise von elektrisch betätigbarer Art sein, ist jedoch vorzugsweise als eine fluidbetätigte und insbesondere pneumatische Antriebseinrichtung konzipiert.

Die erfindungsgemäße Greifvorrichtung besteht aus sehr wenigen und einfach zu fertigenden Teilen. Sie lässt sich mit leichten Werkstoffen realisieren, sodass sie ein geringes Gewicht aufweist. Da die Schließ-Kooperationsfläche und die gegebenenfalls vorhandene Öffnungs-Kooperationsfläche an dem lediglich einseitig von der Schwenkachse wegragenden Greifarm angeordnet sind, kann mit wenig Aufwand eine Vielzahl von Greifbacken mit unterschiedlich geformten Greifarmen verwirklicht werden.

Nachfolgend wird die Erfindung anhand der beiliegenden Zeichnung näher erläutert. In dieser zeigen:
- Figur 1: eine bevorzugte Ausführungsform der erfindungsgemäßen Greifvorrichtung in einer perspektivischen Darstellung, wobei die Greifbacken bei Einnahme einer Schließstellung gezeigt sind,
- Figur 2: die Greifvorrichtung aus Figur 1 in perspektivischer Darstellung, wobei die Greifbacken bei Einnahme einer auseinandergespreizten Offenstellung gezeigt sind,
- Figur 3: eine Draufsicht der Greifvorrichtung mit Blickrichtung gemäß Pfeil III aus Figur 2,
- Figur 4: einen perspektivischen Längsschnitt durch die Greifvorrichtung gemäß Schnittlinie IV-IV aus Figur 1,
- Figur 5: die Greifvorrichtung in einem Längsschnitt gemäß Schnittlinie IV-IV aus Figur 1, wobei eine maximale Schließstellung der schwenkbeweglichen Greifbacken illustriert ist,
- Figur 6: einen Längsschnitt der Greifvorrichtung entsprechend Figur 5, wobei eine maximale Offenstellung der schwenkbeweglichen Greifbacken illustriert ist,
- Figuren 7 und 8: weitere Längsschnitte der Greifvorrichtung entsprechend Figur 5, wobei Betriebszustände illustriert sind, bei denen die schwenkbeweglichen Greifbacken Zwischen-Schwenkstellungen zwischen der maximalen Schließstellung und der maximalen Offenstellung einnehmen, die beim Übergang zwischen der maximalen Schließstellung und der maximalen Offenstellung auftreten können,
- Figur 9: eine perspektivische Darstellung einer modifizierten Ausführungsform der Greifvorrichtung, und
- Figur 10: einen Längsschnitt der Greifvorrichtung aus Figur 9 gemäß Schnittlinie X-X aus Figur 9.

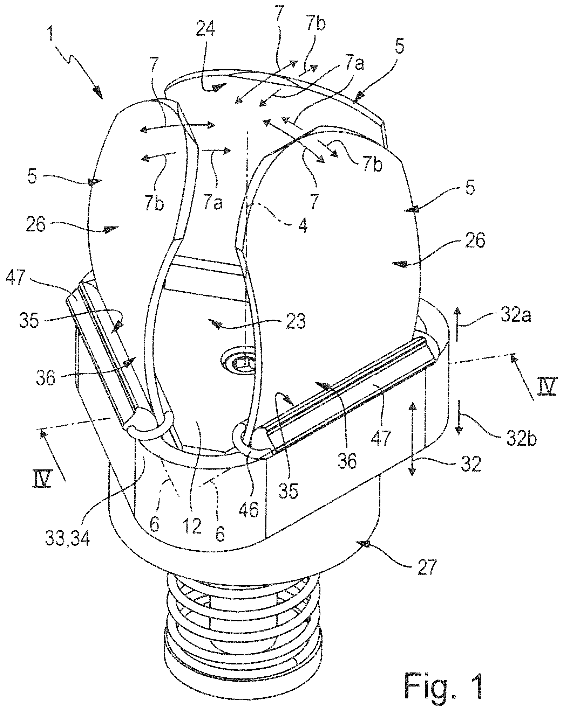

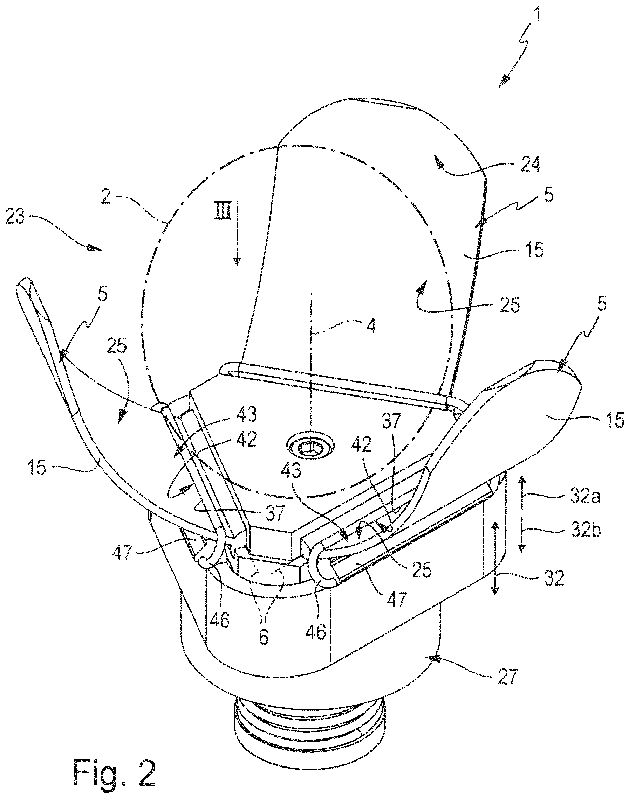

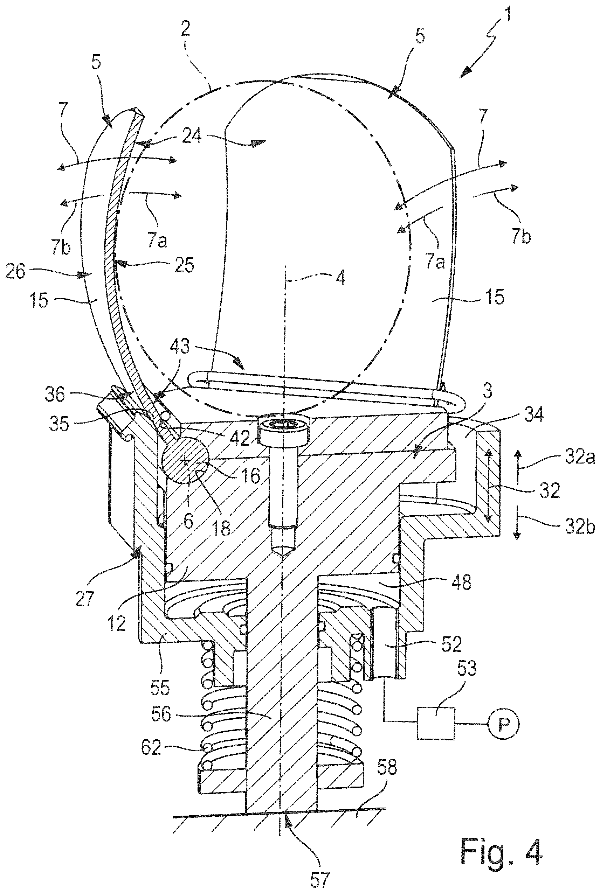

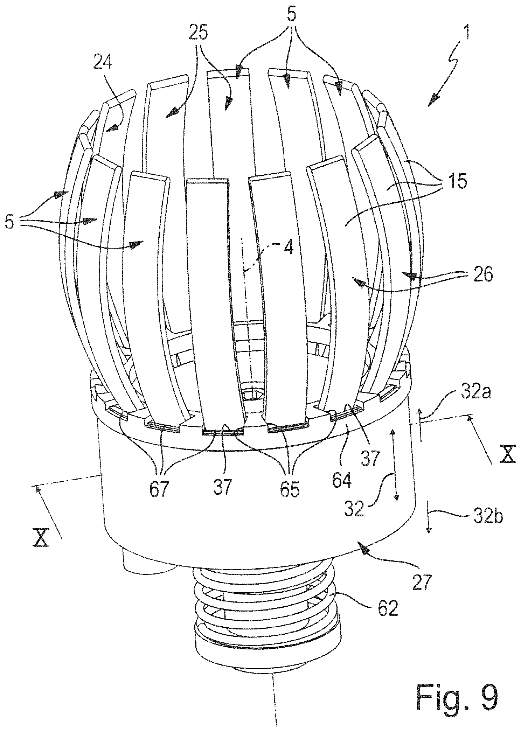

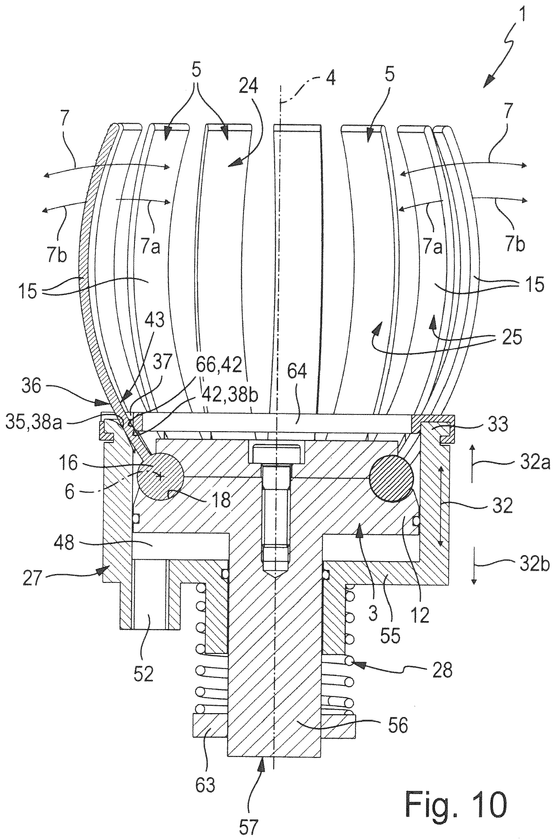

Die nachstehenden Ausführungen orientieren sich hauptsächlich an dem in den Figuren 1 bis 8 illustrierten Ausführungsbeispiel, gelten aber entsprechend auch für das Ausführungsbeispiel der Figuren 9 und 10, wo vergleichbare Komponenten mit den gleichen Bezugszeichen versehen sind.

Die insgesamt mit Bezugsziffer 1 bezeichnete Greifvorrichtung ermöglicht das lösbare Greifen von beliebigen Gegenständen, von denen einer strichpunktiert mit Bezugsziffer 2 identifiziert ist. Bei den Gegenständen 2 kann es sich beispielsweise um Werkstücke, um Verpackungseinheiten oder um Obst oder Gemüse oder sonstige Nahrungsmittel handeln. Mit Hilfe der Greifvorrichtung 1 lassen sich beispielsweise auch Orangen oder Zitronen oder vergleichbare Südfrüchte sanft und sicher ergreifen und festhalten, um sie im Rahmen ihrer Verarbeitung oder ihres Versandes umzupositionieren.

Die Greifvorrichtung 1 verfügt über einen Greifbackenträger 3, der sich entlang einer strichpunktiert angedeuteten linearen Hauptachse 4 erstreckt, bei der es sich zweckmäßigerweise um eine zentrale Längsachse des Greifbackenträgers 3 handelt.

Der Greifbackenträger 3 trägt mehrere Greifbacken, bei denen es sich vorzugsweise allesamt um schwenkbewegliche Greifbacken 5 handelt, von denen jede relativ zum Greifbackenträger 3 um eine ihr individuell zugeordnete Schwenkachse 6 verschwenkbar ist. Die jeweilige Schwenkmöglichkeit ist bei 7 durch einen Doppelpfeil angedeutet.

Bei einem nicht gezeigten Ausführungsbeispiel ist der Greifbackenträger 3 zusätzlich zu mindestens einer schwenkbeweglichen Greifbacke mit mindestens einer unbeweglichen Greifbacke ausgestattet. Jedenfalls ist mindestens eine Greifbacke als eine schwenkbewegliche Greifbacke 5 konzipiert. Zweckmäßig ist es, wenn sämtliche an dem Greifbackenträger 3 angeordneten Greifbacken schwenkbewegliche Greifbacken 5 sind.

Die Greifvorrichtung 1 hat eine in der Zeichnung oben liegende axiale Vorderseite 8 und eine diesbezüglich entgegengesetzte, in der Zeichnung nach unten weisende axiale Rückseite 11. Die Hauptachse 4 erstreckt sich von der axialen Rückseite 11 zu der axialen Vorderseite 8.

Der Greifbackenträger 3 hat einen der axialen Vorderseite 8 zugewandten Endabschnitt, der als Trägerkopf 12 bezeichnet sei und an dem sämtliche schwenkbeweglichen Greifbacken 5 verschwenkbar gelagert sind. Die Schwenkachsen 6 der einzelnen schwenkbeweglichen Greifbacken 5 verlaufen jeweils in einer zu der Hauptachse 4 rechtwinkeligen Radialebene 13, wobei zweckmäßigerweise die Schwenkachsen 6 sämtlicher schwenkbeweglichen Greifbacken 5 in ein und derselben, gemeinsamen Radialebene 13 liegen.

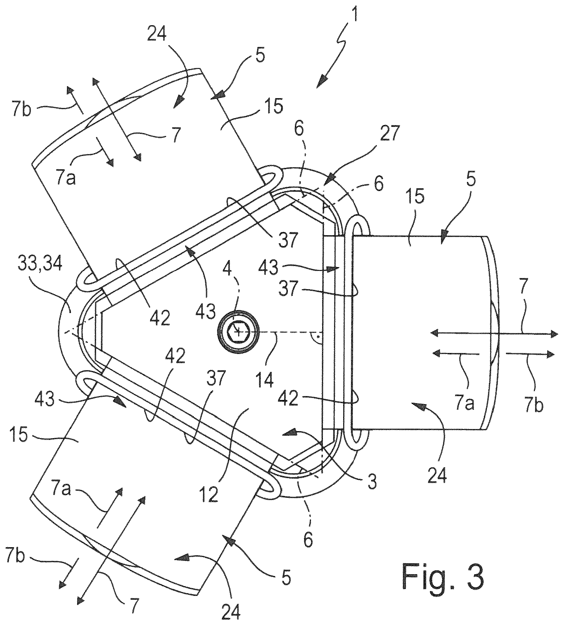

Wie insbesondere aus Figur 3 gut ersichtlich ist, sind alle Schwenkachsen 6 mit radialem Abstand zu der Hauptachse 4 angeordnet. Vorzugsweise verläuft jede Schwenkachse 6 rechtwinkelig zu einem Radialstrahl 14, der die Hauptachse 4 in radialer Richtung trifft.

Die im Folgenden zur Vereinfachung auch nur noch als "Greifbacken" bezeichneten schwenkbeweglichen Greifbacken 5 sind um die Hauptachse 4 herum verteilt angeordnet. Zweckmäßigerweise liegt dabei eine gleichmäßige Verteilung mit untereinander gleichen Winkelabständen vor. Es ist weiterhin vorteilhaft, wenn alle Schwenkachsen 6 untereinander mit gleichem radialem Abstand zu der Hauptachse 4 angeordnet sind.

Alle Schwenkachsen 6 aneinandergereiht bilden zweckmäßigerweise eine regelmäßige Polygonstruktur. Die Greifvorrichtung 1 der Figuren 1 bis 8 ist exemplarisch mit drei Greifbacken 5 ausgestattet, sodass die insgesamt drei Schwenkachsen 6 eine dreieckige Polygonstruktur definieren. Das in Figuren 9 und 10 illustrierte Ausführungsbeispiel macht allerdings deutlich, dass an dem Greifbackenträger 3 bei Bedarf auch eine wesentlich größere Anzahl von Greifbacken 5 schwenkbeweglich gelagert sein kann, wobei dieses Ausführungsbeispiel mit insgesamt fünfzehn Greifbacken 5 ausgestattet ist, sodass die entsprechende Anzahl von Schwenkachsen 6 einen fünfzehneckigen Polygonzug definieren.

Jede Greifbacke 5 verfügt über einen lediglich einseitig von der Schwenkachse 6 wegragenden Greifarm 15. Die Greifbacke 5 ist zweckmäßigerweise einarmig ausgebildet, wobei der Greifarm 15 der einzige Arm ist, der von der Schwenkachse 6 wegragt. Die Greifbacke 5 hat insbesondere keinen für die Einleitung von Betätigungskräften dienenden zusätzlichen Betätigungsarm.

Zur Definition der Schwenkachse 6 verfügt jede Greifbacke 5 zweckmäßigerweise über einen länglichen Schwenkachskörper 16, dessen Längsachse 16a mit der Schwenkachse 6 zusammenfällt. Von dem Schwenkachskörper 16 ragt an einer Stelle seines peripheren Umfangs der Greifarm 15 weg. Abgesehen von dem Bereich, in dem der Greifarm 15 angeordnet ist, hat der Schwenkachskörper 16 zweckmäßigerweise eine kreiszylindrische Außenfläche 17, die bevorzugt eine zur Schwenklagerung dienende Lagerfläche 17a definiert.

In dem Trägerkopf 12 ist für jeden Schwenkachskörper 16 eine kreiszylindrisch konturierte Lagerausnehmung 18 ausgebildet, die an einer Stelle ihres Umfangs eine Durchtrittsöffnung 18a aufweist. Die Greifbacke 5 ist mit dem Schwenkachskörper 16 in der Lagerausnehmung 18 verdrehbar aufgenommen, wobei der Greifarm 15 durch die Durchtrittsöffnung 18a hindurchragt. Die Umfangserstreckung der Durchtrittsöffnung 18a ist ausreichend groß bemessen, um die Schwenkbewegung 7 des Greifarms 15 zu ermöglichen.

Bei der Schwenkbewegung 7 gleitet der Schwenkachskörper 16 mit seiner Lagerfläche 17a an der Innenumfangsfläche der Lagerausnehmung 18 ab. Somit ist der Schwenkachskörper 16 in der Lagerausnehmung 18 drehbar gelagert, wobei die Drehachse des Schwenkachskörpers 16 die Schwenkachse 6 der Greifbacke 5 definiert.

Jede Durchtrittsöffnung 18a befindet sich zweckmäßigerweise im Bereich der radialen Außenumfangsfläche 22 des Greifbackenträgers 3.

Der Schwenkachskörper 16 und der Greifarm 15 sind zweckmäßigerweise einstückig miteinander verbunden. Es ist vorteilhaft, wenn die gesamte Greifbacke 5 einstückig ausgebildet ist. Sie kann dann besonders vorteilhaft als Spritzgussteil oder generativ gefertigt werden.

Die Greifarme 15 ragen ausgehend von dem Schwenkachskörper 16 in Richtung zu der axialen Vorderseite 8 der Greifvorrichtung 1. Je nachdem, welche Schwenkposition die Greifbacke 5 momentan einnimmt, liegt dabei ein unterschiedlicher Neigungswinkel zwischen der Greifbacke 5 und der Hauptachse 4 vor.

Die Greifbacken 5 umrahmen mit ihren Greifarmen 15 einen Greifraum 23. In diesem Greifraum 23 wird ein zu ergreifender Gegenstand 2 angeordnet. Der Greifraum 23 ist dem Greifbackenträger 3 zu der axialen Vorderseite 8 hin vorgelagert.

Jeder Greifarm 15 verfügt über eine Greiffläche 24, mit der er einen zu ergreifenden Gegenstand 2 beaufschlagen kann. Bevorzugt befindet sich die Greiffläche 24 an der der Hauptachse 4 zugewandten Innenfläche 25 eines jeweiligen Greifarmes 15. Auf diese Weise kann die Greifvorrichtung 1 als Außengreifer verwendet werden, die einen festzuhaltenden Gegenstand 2 außen umgreift, wobei dieser Gegenstand 2 in dem Greifraum 23 angeordnet ist.

Bei einem nicht gezeigten Ausführungsbeispiel ist die Greiffläche von der der Hauptachse 4 abgewandten Außenfläche 26 des Greifarms 15 gebildet. Dies ermöglicht es, die Greifvorrichtung 1 als einen Innengreifer zu nutzen.

Die schwenkbewegliche Lagerung einer jeweiligen Greifbacke 5 ermöglicht es der Greifbacke 5, sowohl eine durch einen Pfeil illustrierte Schließ-Schwenkbewegung 7a als auch eine diesbezüglich entgegengesetzte, ebenfalls durch einen Pfeil illustriert Öffnungs-Schwenkbewegung 7b auszuführen. Bei der Schließ-Schwenkbewegung 7a wird der Greifarm 15 einwärts, in Richtung zur Hauptachse 4 verschwenkt. Bei der Öffnungs-Schwenkbewegung 7b wird der Greifarm 15 auswärts, das heißt von der Hauptachse 4 weg nach radial außen verschwenkt. Diese Schwenkbewegungen können mit Hilfe eines Betätigungsschiebers 27 der Greifvorrichtung 1 hervorgerufen werden, der zweckmäßigerweise zu einer in die Greifvorrichtung 1 integrierten Antriebseinrichtung 28 gehört.

Mit Hilfe des Betätigungsschiebers 27 können alle vorhandenen Greifbacken 5 synchron betätigt werden, sodass ihre Greifarme 15 jeweils synchron entweder nach radial innen oder nach radial außen verschwenkt werden. Auf diese Weise lässt sich der Querschnitt des Greifraumes 23 zum Ergreifen oder Freigeben eines Gegenstandes 2 variieren.

Der Betätigungsschieber 27 ist an dem Greifbackenträger 3 in Achsrichtung der Hauptachse 4 linear verschiebbar gelagert. Diese Verschiebemöglichkeit ist bei 32 durch einen Doppelpfeil angedeutet. Der Betätigungsschieber 27 kann dabei entweder eine durch einen Pfeil illustrierte Schließ-Betätigungsbewegung 32a oder eine diesbezüglich axial entgegengesetzte Öffnungs-Betätigungsbewegung 32b ausführen. Beide Betätigungsbewegungen 32a, 32b finden in Achsrichtung der Hauptachse 4 statt, wobei die Schließ-Betätigungsbewegung 32a zur axialen Vorderseite 8 und die Öffnungs-Betätigungsbewegung 32b zur axialen Rückseite 11 der Greifvorrichtung 1 orientiert ist.

Vorzugsweise ist der Betätigungsschieber 27 insgesamt hülsenförmig ausgebildet und koaxial auf den Greifbackenträger 3 aufgeschoben, sodass er Letzteren unter Gewährleistung der axialen Relativbeweglichkeit koaxial umschließt.

Insbesondere ein der axialen Vorderseite 8 zugewandter vorderer Endabschnitt 34 des Betätigungsschiebers 27 bildet einen zur Betätigung der Greifbacken 5 mit diesen Greifbacken 5 zusammenwirkenden Betätigungsabschnitt 33. Hierzu ist der vordere Endabschnitt 34 und dementsprechend auch der Betätigungsabschnitt 33 zweckmäßigerweise ringförmig oder rahmenförmig ausgebildet und übergreift sämtliche Greifarme 15 an ihren Außenflächen 26 von der axialen Rückseite 11 her. Auf diese Weise sind alle Greifarme 15 radial außen gemeinsam von dem ring- oder rahmenförmigen Betätigungsabschnitt 33 umschlossen. Letzteres allerdings nur ein Stückweit in ihrem der Schwenkachse 6 beziehungsweise dem Schwenkachskörper 16 zugewandten Fußabschnitt 15a. Der sich daran anschließende Längenabschnitt der Greifarme 15, der einen frei endenden Kopfabschnitt 15b beinhaltet, wird von dem Betätigungsabschnitt 33 zweckmäßigerweise nicht übergriffen.

An dem Betätigungsabschnitt 33 ist für jede Greifbacke 5 eine die Schließ-Schwenkbewegung 7a hervorrufende Schließ-Antriebsfläche 35 ausgebildet. Jede Schließ-Antriebsfläche 35 befindet sich an der der Hauptachse 4 und mithin der Außenfläche 26 des Greifarmes 15 zugewandten Innenseite des Betätigungsabschnittes 33. Die Schließ-Antriebsfläche 35 liegt auf axialer Höhe mit dem Greifarm 15 der zugeordneten Greifbacke 5.

Jede Schließ-Antriebsfläche 35 kann mit einer an der Außenfläche 26 des zugeordneten Greifarms 15 ausgebildeten Schließ-Kooperationsfläche 36 zusammenwirken. Genauer gesagt kann die Schließ-Antriebsfläche 35 eine in Richtung der Hauptachse 4 orientierte drückende Kraft auf den zugeordneten Greifarm 15 ausüben, um die betreffende Greifbacke 5 mit einem die Schließ-Schwenkbewegung 7a hervorrufenden Drehmoment zu beaufschlagen und entsprechend zu verschwenken.

Die Schließ-Kooperationsfläche 36 ist bezüglich der Hauptachse 4 geneigt. Sie hat eine Erstreckung in Richtung zu der axialen Vorderseite 8 und dabei gleichzeitig nach radial außen. Näher bei der Schwenkachse 6 liegende Bereiche der Schließ-Kooperationsfläche 36 haben einen geringeren Abstand zur Hauptachse 4 als diesbezüglich von der Schwenkachse 6 weiter entfernte Bereiche der Schließ-Kooperationsfläche 36.

Jede Schließ-Antriebsfläche 35 macht die Verschiebebewegung 32 des Betätigungsschiebers 27 mit, sodass sie sich bei der Schließ-Betätigungsbewegung 32a in Richtung zur axialen Vorderseite 8 und bei der Öffnungs-Betätigungsbewegung 32b in Richtung zu der axialen Rückseite 11 bewegt.

Zumindest bei der Schließ-Betätigungsbewegung 32a gleitet die Schließ-Antriebsfläche 35 an der Schließ-Kooperationsfläche 36 des zugeordneten Greifarmes 15 ab, was wegen des geneigten Längsverlaufes der Schließ-Kooperationsfläche 36 dazu führt, dass die Greifbacke 5 zu der Schließ-Schwenkbewegung 7a angetrieben wird.

Wenn umgekehrt der Betätigungsschieber 27 ausgehend von einer nach vorne verschobenen Position in Richtung zu der axialen Rückseite 11 verschoben wird, ist die zugeordnete Greifbacke 5 aufgrund der entsprechend axial zurückweichenden Schließ-Antriebsfläche 35 in der Lage, im Rahmen einer Öffnungs-Schwenkbewegung 7b wieder nach auswärts zu verschwenken.

Die Öffnungs-Schwenkbewegung 7b wird zweckmäßigerweise ebenfalls aktiv durch den Betätigungsschieber 27 hervorgerufen, wenn dieser die Öffnungs-Betätigungsbewegung 32b ausführt.

Um diese vorgenannte Öffnungsfunktion zu erfüllen, ist die Greifvorrichtung 1 bevorzugt so ausgebildet, dass der Betätigungsschieber 27 für jede Greifbacke 5 einen Antriebsschlitz 37 aufweist, durch den die zugeordnete Greifbacke 5 mit ihrem Greifarm 15 hindurchgreift. Der Antriebsschlitz 37 ist ein Längsschlitz mit zur Schwenkachse 6 der zugeordneten Greifbacke 5 paralleler Längsausrichtung. Von den beiden sich gegenüberliegenden längsseitigen Schlitzflanken 38a, 38b des Antriebsschlitzes 37 bildet die eine, erste Schlitzflanke 38a die Schließ-Antriebsfläche 35, während die andere, zweite Schlitzflanke 38b eine der Innenfläche 25 des Greifarms 15 zugewandte Öffnungs-Antriebsfläche 42 bildet.

Die Öffnungs-Antriebsfläche 42 liegt gleitverschieblich an einer Öffnungs-Kooperationsfläche 43 des zugeordneten Greifarms 15 an, die von der Innenfläche 25 des Greifarms 15 gebildet ist und mithin der Hauptachse 4 zugewandt ist. Die Öffnungs-Antriebsfläche 42 weist bezogen auf die Hauptachse 4 radial nach außen.

Wenn der Betätigungsschieber 27 seine Verschiebebewegung 32 ausführt, gleitet der Betätigungsabschnitt 33 mit der Öffnungs-Antriebsfläche 42 wenigstens während der Öffnungs-Betätigungsbewegung 32b an der Öffnungs-Kooperationsfläche 43 des Greifarms 15 entlang und drückt dadurch den Greifarm 15 radial nach außen, wobei das daraus resultierende Drehmoment die Öffnungs-Schwenkbewegung 7b der Greifbacke 5 zur Folge hat. Dies ist insbesondere auch darauf zurückzuführen, dass die Öffnungs-Kooperationsfläche 43 wie schon die Schließ-Kooperationsfläche 36 einen bezüglich der Hauptachse 4 geneigten Verlauf hat und sich mit zunehmender axialer Entfernung von der Schwenkachse 6 auch radial von der Hauptachse 4 entfernt.

Somit werden bei der Schließ-Betätigungsbewegung 32a die Greifbacken 5 durch das Zusammenwirken zwischen der Schließ-Kooperationsfläche 36 und der daran abgleitenden Schließ-Antriebsfläche 35 nach innen gedrückt und verschwenkt, während sie bei der Öffnungs-Betätigungsbewegung 32 durch das Zusammenwirken der Öffnungs-Kooperationsfläche 43 mit der daran abgleitenden Öffnungs-Antriebsfläche 42 nach außen gedrückt und verschwenkt werden.

Besonders vorteilhaft ist es, wenn die Schließ-Kooperationsfläche in der Längsrichtung des Greifarms 15, also ausgehend von der Schwenkachse 6 zum entgegengesetzten Kopfabschnitt 15b konvex gewölbt ist. Die Öffnungs-Kooperationsfläche 43 ist in der gleichen Richtung zweckmäßigerweise konkav gewölbt. Die beschriebenen Wölbungen gelten zweckmäßigerweise im einen Fall für die gesamte Außenfläche 26 und im anderen Fall für die gesamte Innenfläche 25 des Greifarms 15.

Sowohl die Schließ-Kooperationsfläche 36 als auch die vorzugsweise vorhandene Öffnungs-Kooperationsfläche 43 sind benachbart zur Schwenkachse 6 am Greifarm 15 ausgebildet, insbesondere an dem weiter oben erwähnten Fußabschnitt 15a.

Bevorzugt sind die Schließ-Kooperationsfläche 36 und die Öffnungs-Kooperationsfläche 43 mit gleichem Abstand zu der Schwenkachse 6 angeordnet. Der Greifarm 15 hat zumindest über die Länge der Schließ-Kooperationsfläche 36 und der Öffnungs-Kooperationsfläche 43 hinweg zweckmäßigerweise eine konstante Dicke.

Der den Betätigungsabschnitt 33 bildende vordere Endabschnitt 34 des Betätigungsschiebers 27 ist vorzugsweise becherförmig ausgebildet, was auf das Ausführungsbeispiel zutrifft.

Bevorzugt sind die Schließ-Antriebsflächen 35 von in der Umfangsrichtung der Hauptachse 4 zueinander beabstandeten Abschnitten der der Hauptachse 4 zugewandten Innenfläche des Betätigungsabschnittes 33 gebildet. Hierzu weist beim Ausführungsbeispiel der sich ansonsten ununterbrochen rings um die Hauptachse 4 herum erstreckende Betätigungsabschnitt 33 im Bereich seiner Vorderseite eine in der Umfangsrichtung segmentierte Struktur auf. Jede Schließ-Antriebsfläche 35 ist dadurch an einem Segment 47 des Betätigungsabschnittes 33 ausgebildet, das zu den in der Umfangsrichtung der Hauptachse 4 jeweils benachbarten Segmenten 47 des Betätigungsabschnittes 33 beabstandet ist.

Der Betätigungsabschnitt 32 kann alternativ auch eine in sich geschlossene Ringfläche aufweisen, wobei die Schließ-Antriebsflächen 35 von sich in der Umfangsrichtung der Hauptachse 4 unmittelbar aneinander anschließenden oder zueinander beabstandeten Flächenabschnitten der Ringfläche gebildet sind.

Es versteht sich, dass zur Ausbildung der Schließ-Antriebsfläche 35 und der Öffnungs-Antriebsfläche 42 nicht zwingend jeweils ein Antriebsschlitz 37 in dem Betätigungsschieber 27 ausgebildet sein muss.

Beim Ausführungsbeispiel enthält der Betätigungsschieber 27 einen Hauptkörper 44, der unmittelbar den Betätigungsabschnitt 33 und die daran ausgebildeten Schließ-Antriebsflächen 35 aufweist. An diesem Hauptkörper 44 ist zur Ausbildung der Antriebsschlitze 37 pro Greifbacke 5 ein Ösenelement 46 fixiert, an dem die zugeordnete Öffnungs-Antriebsfläche 42 ausgebildet ist.

Das Ösenelement 46, bei dem es sich vorzugsweise um einen länglichen, bevorzugt federelastisch biegbaren Ringkörper 46a handelt, ist auf einen die Schließ-Antriebsfläche 35 aufweisenden axialen Fortsatz 47a des Betätigungsabschnittes 33 aufgesetzt, an dem es gehalten ist, beispielsweise mittels eines nasenartigen Vorsprunges des axialen Fortsatz 47a. Jeder axiale Fortsatz 47a bildet zweckmäßigerweise eines der oben erwähnten Segmente 47 des Betätigungsabschnittes 33. Einer der längsseitigen stegartigen Schenkel des Ösenelementes 46 stützt sich an der radialen Außenseite des axialen Fortsatzes 47 ab, während der andere längsseitige stegartige Schenkel des Ösenelementes 46 an der Innenseite des Betätigungsabschnittes 33 liegt und zu der Schließ-Antriebsfläche 35 beabstandet ist, wobei er die Öffnungs-Antriebsfläche 42 aufweist.

Insbesondere um die Montage des Ösenelementes 46 zu erleichtern, ist der Ringkörper 46a des Ösenelementes46 zweckmäßigerweise an einer Stelle unterbrochen, sodass sich die Ringstruktur bei der Montage vorübergehend elastisch aufweiten lässt. Auf diese Weise kann das Ösenelement 46 problemlos auf den eine hinterschnittene Kontur aufweisenden axialen Fortsatz 47 aufgesetzt insbesondere aufgeschnappt werden.

Jedes Ösenelement 46 ist zweckmäßigerweise um eine zur Schwenkachse 6 der zugeordneten Greifbacke 5 parallele Achse schwenkbeweglich am Betätigungsabschnitt 33 gehalten. Diese Maßnahme begünstigt die Schwenkbeweglichkeit der Greifbacke 5. Insbesondere ist die Öffnungs-Antriebsfläche 42 dadurch in der Lage, ihre Relativposition bezüglich der Schließ-Antriebsfläche 35 in sowohl der axialen Richtung der Hauptachse 4 als auch in dazu radialer Richtung zu verändern. Als Lagerelement für die Schwenkbeweglichkeit des Ösenelementes 46 dient zweckmäßigerweise der äußere stegartige Schenkel des Ösenelementes 46.

Die in der Greifvorrichtung 1 integrierten Greifbacken 5 sind zweckmäßigerweise voneinander gesonderte Komponenten, die untereinander keine Verbindung haben. Sie sind daher prinzipiell unabhängig voneinander verschwenkbar. Dies begünstigt den Greifvorgang, weil die anderen Greifbacken 5 in ihrer Schwenkbewegung nicht beeinträchtigt werden, wenn eine der Greifbacken 5 aufgrund eines Kontaktes mit der Oberfläche eines festzuhaltenden Gegenstandes an einer Weiterbewegung gehindert ist.

Es ist von Vorteil, wenn jede Greifbacke 5, insbesondere im Bereich des Greifarmes 15, federelastisch verformbar ist. Diese Verformbarkeit ermöglicht es der Greifbacke, sich zur Anpassung an die Oberfläche eines zu greifenden Gegenstandes 2 reversibel elastisch zu verformen. Es ist zweckmäßig, die Greifbacke 5 so zu gestalten, dass ihr Greifarm 15 insgesamt eine bogenförmig gewölbte Längserstreckung hat. Der Greifarm 15 ist also an der Innenfläche 25 konkav gewölbt und an der Außenfläche 26 konvex gewölbt. Kommt der Greifarm 15 mit einem festzuhaltenden Gegenstand 2 in Kontakt, kann sich die Intensität der Wölbung aufgrund elastischer Verformung verändern. Auf diese Weise wird die Schließ-Betätigungsbewegung 32a des Betätigungsschiebers 27 nicht behindert, wenn ein Greifarm 15 vor den übrigen Greifarmen mit einem festzuhaltenden Gegenstand 2 in Kontakt tritt.

Um die lineare Verschiebebewegung 32 des Betätigungsschiebers 27 relativ zu dem Greifbackenträger 3 hervorzurufen, ist die Greifvorrichtung 1 zweckmäßigerweise mit einer weiter oben schon erwähnten Antriebseinrichtung 28 ausgestattet. Mit Hilfe dieser Antriebseinrichtung 28 kann sowohl die Schließ-Schwenkbewegung 7a als auch die Öffnungs-Schwenkbewegung 7b hervorgerufen werden.

Die Antriebseinrichtung 28 ist ausgebildet, um wahlweise die Schließ-Betätigungsbewegung 32a oder die Öffnungs-Betätigungsbewegung 32b des Betätigungsschiebers 27 relativ zu dem die Greifbacken 5 tragenden Greifbackenträger 3 hervorzurufen.

Die Antriebseinrichtung 28 ist bevorzugt von fluidbetätigbarer Bauart und eignet sich insbesondere für einen Betrieb mit Druckluft als Antriebsmedium. Exemplarisch ist die Antriebseinrichtung 28 vergleichbar einem einfachwirkenden Arbeitszylinder mit Federrückstellung aufgebaut.

Der Betätigungsschieber 27 und der Greifbackenträger 3 begrenzen gemeinsam eine Betätigungskammer 48, in die ein einen Fluiddurchtritt ermöglichender Steuerkanal 50 einmündet, der entweder den Greifbackenträger 3 oder - wie beim Ausführungsbeispiel - den Betätigungsschieber 27 durchsetzt. Der Steuerkanal 52 ist unter Zwischenschaltung einer Steuerventileinrichtung 53 an eine Druckquelle P anschließbar oder angeschlossen.

Zwischen dem Greifbackenträger 3 und dem Betätigungsschieber 27 angeordnete Dichtungsmittel 54 sorgen für eine fluiddichte Abtrennung der Betätigungskammer 48 von der Umgebung.

Bevorzugt ist die Betätigungskammer 48 an ihrer Vorderseite von dem Trägerkopf 12 und an ihrer Rückseite von einer von dem Betätigungsschieber 27 gebildeten Abschlusswand 55 begrenzt.

Der Greifbackenträger 3 verfügt zweckmäßigerweise über einen bevorzugt stangenförmig ausgebildeten rückwärtigen Endabschnitt 56, der sich rückseitig an den Trägerkopf 12 anschließt und der die Abschlusswand 55 unter Abdichtung gleitverschieblich durchsetzt. An diesem rückwärtigen Endabschnitt 56 ist außerhalb der Betätigungskammer 48 mindestens eine Befestigungsschnittstelle 57 angeordnet, mit deren Hilfe der Greifbackenträger 3 an einer nur schematisch angedeuteten Haltestruktur 58 festlegbar ist. Die Haltestruktur 58 ist beispielsweise Bestandteil eines Manipulators, mit dessen Hilfe die Greifvorrichtung 1 bewegt und wunschgemäß positioniert werden kann.

Eine zwischen den Betätigungsschieber 27 und den Greifbackenträger 3 eingegliederte Federeinrichtung 62 spannt den Betätigungsschieber 27 relativ zu dem Greifbackenträger 3 in eine Grundstellung vor. Exemplarisch ist diese Grundstellung eine maximale Schließstellung der Greifbacken 5, in der die Greifbacken 5 mit ihren Greifarmen 15 weitestmöglich nach radial innen geschwenkt sind.

Beim Ausführungsbeispiel sitzt die Federeinrichtung 62 auf dem zweckmäßigerweise stangenförmigen rückwärtigen Endabschnitt 56 in koaxialer Verlängerung zu der Betätigungskammer 48, wobei sie sich einerseits an der Abschlusswand 55 und andererseits an einem bezüglich des rückwärtigen Endabschnitts 56 ortsfesten Abstützabschnitt 63 abstützt. Die Federeinrichtung 62 ist hier eine Druckfedereinrichtung.

Nachfolgend soll eine mögliche Betriebsweise der Greifvorrichtung 1 erläutert werden.

Im Ausgangszustand ist die Betätigungskammer 48 durch entsprechende Ansteuerung der Steuerventileinrichtung 53 entlüftet, sodass der Betätigungsschieber 27 durch die Kraft der Federeinrichtung 62 in einer vorderen Endstellung gehalten ist, in der das Volumen der Betätigungskammer 48 ein Minimum aufweist. Diese vordere Endstellung ist insbesondere dadurch vorgegeben, dass der Betätigungsschieber 27 mit seiner Abschlusswand 55 rückseitig an dem Trägerkopf 12 anliegt. In dieser vorderen Endstellung sind die Schließ-Antriebsflächen 35 weitestmöglich in Richtung zu der axialen Vorderseite 8 verlagert und befinden sich im vorderen Endbereich der jeweils zugeordneten Schließ-Kooperationsfläche 36.

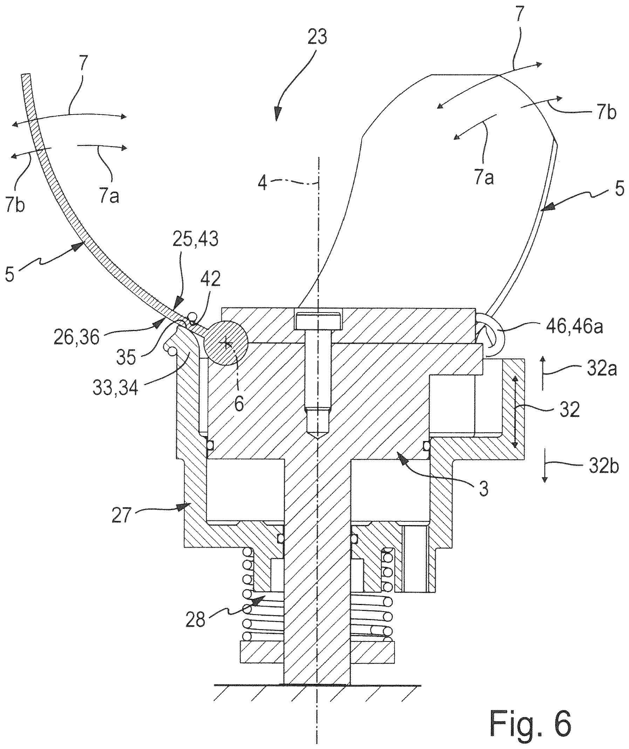

Die geschilderte vordere Endstellung des Betätigungsschiebers 27 gibt die maximale Schließstellung der Greifbacken 5 vor. Ausgehend hiervon können die Greifbacken 5 unter Ausführung der Öffnungs-Schwenkbewegung 7b in die aus Figur 6 ersichtliche maximale Offenstellung verschwenkt werden. Dies geschieht durch eine Fluidbeaufschlagung der Betätigungskammer 48 aus der Druckquelle P durch entsprechende Betätigung der Steuerventileinrichtung 53. Die Druckbeaufschlagung der Betätigungskammer 48 hat zur Folge, dass sich der Betätigungsschieber 27 unter Ausführung der Öffnungs-Betätigungsbewegung 32b relativ zum Greifbackenträger 3 und zu den daran schwenkbeweglich gelagerten Greifbacken 5 in Richtung zu der axialen Rückseite 11 bewegt, wobei sowohl die Schließ-Antriebsfläche 35 als auch die Öffnungs-Antriebsfläche 42 diese Öffnungs-Betätigungsbewegung 32b mitmachen. Hierbei wird jeder Greifarm 15 durch die an der Schließ-Kooperationsfläche 36 abgleitende Schließ-Antriebsfläche 35 und durch die an der Öffnungs-Kooperationsfläche 43 abgleitende Öffnungs-Antriebsfläche 42 zwangsgeführt und zur Ausübung der Öffnungs-Schwenkbewegung 7b angetrieben.

Die maximale Offenstellung ist durch Hubbegrenzungsmittel vorgegeben, die zwischen dem Betätigungsschieber 27 und dem Greifbackenträger 3 wirksam sind. Diese Hubbegrenzungsmittel können im einfachsten Fall von der maximal komprimierten Federeinrichtung 62 gebildet sein.

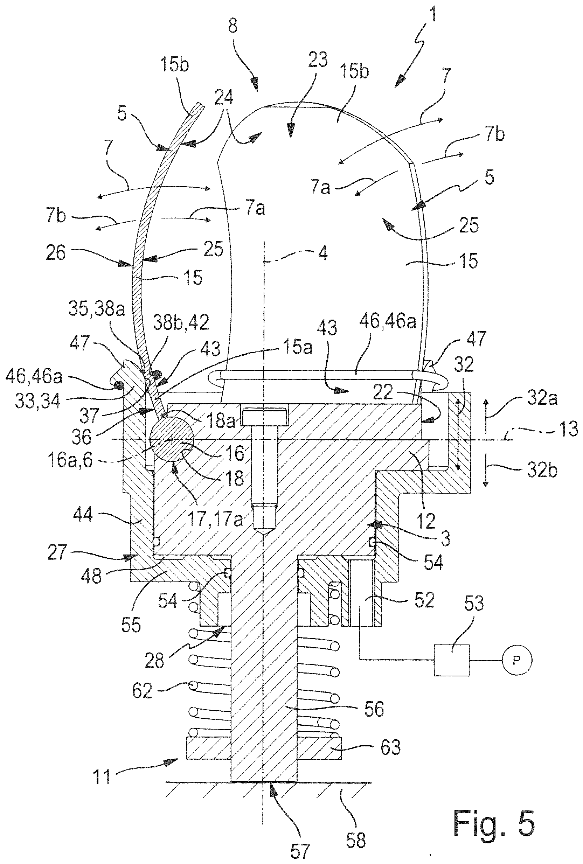

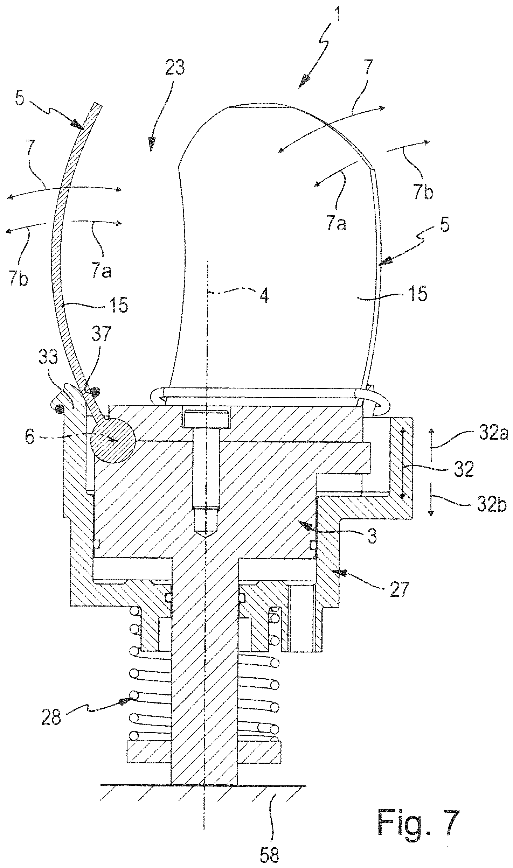

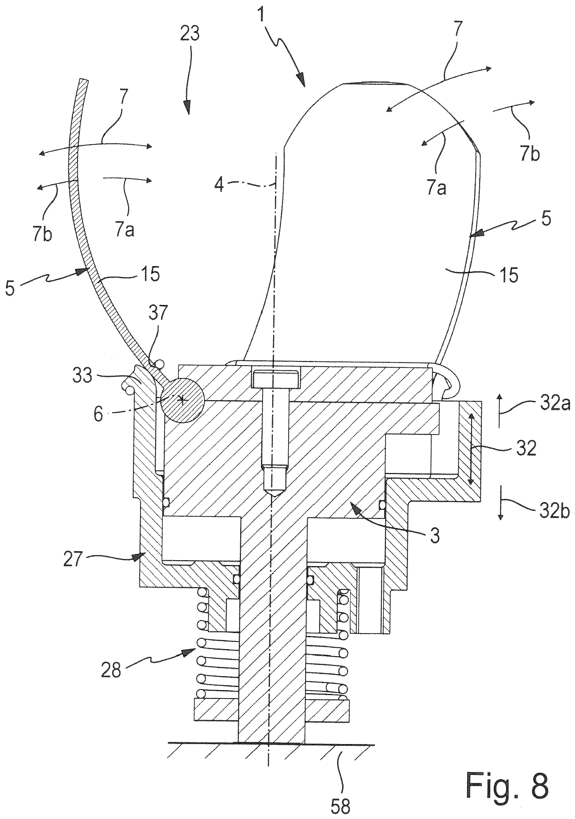

Die Figuren 7 und 8 zeigen Zwischenstellungen zwischen der maximalen Schließstellung gemäß Figur 5 und der maximalen Offenstellung gemäß Figur 6.

Sollen die Greifbacken 5 ausgehend von der maximalen Offenstellung geschlossen, das heißt ihre Greifarme 15 unter Ausführung der Schließ-Schwenkbewegung 7a nach innen verschwenkt werden, kann dies durch eine Entlüftung der Betätigungskammer 48 mittels der Steuerventileinrichtung 53 bewirkt werden. Diese Entlüftung hat zur Folge, dass die Federeinrichtung 62 den Betätigungsschieber 27 zu der Schließ-Betätigungsbewegung 32a antreibt und in Richtung zu der axialen Vorderseite 8 verschiebt. Dabei gleiten die Schließ-Antriebsflächen 35 an der jeweils zugeordneten Schließ-Kooperationsfläche 36 ab und schwenken den zugeordneten Greifarm 15 nach innen.

Die Antriebseinrichtung 28 kann auch so ausgebildet sein, dass die Greifbacken 5 durch die Federeinrichtung 62 in die maximale Offenstellung vorgespannt sind und durch gesteuerte Fluidbeaufschlagung in die Schließstellung verschwenkt werden können.

Das in Figuren 9 und 10 illustrierte Ausführungsbeispiel der Greifvorrichtung 1 hat einen vergleichbaren Aufbau wie das Ausführungsbeispiel der Figuren 1 bis 8. Es unterscheidet sich im Wesentlichen nur durch die Anzahl der vorhandenen Greifbacken 5 und durch die Art und Weise der Realisierung der Antriebsschlitze 37.

Die Antriebsschlitze 37 sind beim Ausführungsbeispiel der Figuren 9 und 10 dadurch realisiert, dass ein Führungsring 64 axial auf die Greifbacken 5 aufgesteckt ist, wobei dieser Führungsring 64 eine der Anzahl der Greifbacken 5 entsprechende Anzahl von Durchbrechungen 65 aufweist, durch die jeweils der Greifarm 15 einer Greifbacke 5 hindurchragt.

Jede Durchbrechung 65 hat eine der Innenfläche 25 des zugeordneten Greifarms 15 gegenüberliegende innere Randfläche 66, die die Öffnungs-Antriebsfläche 42 bildet. Jede Schließ-Antriebsfläche 35 ist unmittelbar von einem Abschnitt der Innenumfangsfläche des ringförmigen Betätigungsabschnittes 33 gebildet, der bevorzugt eine abgerundete Kontur hat. Die der Außenfläche 26 gegenüberliegende äußere Randfläche 67 jeder Durchbrechung 65 ist mit Abstand zu der Außenfläche 26 angeordnet, sodass sie in keiner Betriebsphase mit dem Greifarm 15 in Kontakt gelangt und die Funktion der am Betätigungsabschnitt 33 ausgebildeten Schließ-Antriebsflächen 35 nicht beeinträchtigt wird.

Obgleich die Betätigungskraft für die Schließ-Schwenkbewegung 7a durch die Schließ-Antriebsfläche 35 aufgebracht wird und die Betätigungskraft für die Öffnungs-Schwenkbewegung 7b durch die Öffnungs-Antriebsfläche 42 aufgebracht wird, übernehmen zweckmäßigerweise sowohl bei der Schließ-Betätigungsbewegung 32a als auch bei der Öffnungs-Betätigungsbewegung 32b jeweils beide ein und demselben Greifarm 15 zugeordnete Antriebsflächen 35, 42 eine Führungsfunktion zur Zwangsführung des Greifarms 15 bei der Schwenkbewegung 7. Dies gilt für beide Ausführungsbeispiele.

## Patentansprüche

1. Greifvorrichtung, mit einem Greifbackenträger (3) und mehreren daran um eine Hauptachse (4) des Greifbackenträgers (3) herum verteilt angeordneten Greifbacken (5), wobei mindestens eine der Greifbacken (5) eine an dem Greifbackenträger (3) um eine Schwenkachse (6) verschwenkbar gelagerte schwenkbewegliche Greifbacke (5) ist, die einen einseitig von der Schwenkachse (6) wegragenden, mit einer zum Greifen eines Gegenstandes (2) dienenden Greiffläche (24) versehenen Greifarm (15) aufweist, der bei einer Schließ-Schwenkbewegung (7a) der Greifbacke (5) nach radial innen in Richtung zu der Hauptachse (4) des Greifbackenträgers (3) und bei einer entgegengesetzten Öffnungs-Schwenkbewegung (7b) der Greifbacke (5) von der Hauptachse (4) weg nach radial außen verschwenkt wird, und mit einem Betätigungsschieber (27) zur Betätigung jeder schwenkbeweglichen Greifbacke (5), der unter Ausführung einer Schließ-Betätigungsbewegung (32a) und einer diesbezüglich entgegengesetzten Öffnungs-Betätigungsbewegung (32b) jeweils relativ zu dem Greifbackenträger (3) in Achsrichtung der Hauptachse (4) linear verschiebbar ist und der für jede schwenkbewegliche Greifbacke (5) eine Schließ-Antriebsfläche (35) aufweist, die bei seiner Schließ-Betätigungsbewegung (32a) an einer bezüglich der Hauptachse (4) des Greifbackenträgers (3) geneigten Schließ-Kooperationsfläche (36) der zugeordneten schwenkbeweglichen Greifbacke (5) entlanggleitet und dadurch deren Schließ-Schwenkbewegung (7a) hervorruft, wobei die Schließ-Kooperationsfläche (36) von der Hauptachse (4) wegweisend an der von der Hauptachse (4) radial abgewandten Außenfläche (26) des Greifarmes (15) einer jeweiligen schwenkbeweglichen Greifbacke (5) angeordnet ist und der Greifarm (15) an seiner Außenfläche (26) von einem an seiner der Hauptachse (4) zugewandten Innenseite die jeweilige Schließ-Antriebsfläche (35) aufweisenden Betätigungsabschnitt (33) des Betätigungsschiebers (27) in Achsrichtung der Hauptachse (4) übergriffen wird, **dadurch gekennzeichnet, dass** an der der Hauptachse (4) zugewandten Innenfläche (25) jedes schwenkbeweglichen Greifarmes (15) eine bezüglich der Hauptachse (4) geneigte Öffnungs-Kooperationsfläche (43) angeordnet ist, der mit Bezug zur Hauptachse (4) radial innen eine am Betätigungsschieber (27) angeordnete und nach radial außen weisende Öffnungs-Antriebsfläche (42) gegenüberliegt, die bei der Öffnungs-Betätigungsbewegung (32b) des Betätigungsschiebers (27) an der Öffnungs-Kooperationsfläche (43) des zugeordneten schwenkbeweglichen Greifarmes (15) entlanggleitet und dadurch dessen Öffnungs-Schwenkbewegung (7b) hervorruft.

2. Greifvorrichtung nach Anspruch 1, **dadurch gekennzeichnet, dass** mehrere und zweckmäßigerweise sämtliche Greifbacken (5) als schwenkbewegliche Greifbacken (5) ausgebildet sind, wobei zweckmäßigerweise mindestens drei schwenkbare Greifbacken (5) vorhanden sind.

3. Greifvorrichtung nach Anspruch 1 oder 2, **dadurch gekennzeichnet, dass** die Greifbacken (5) mit untereinander gleichem radialem Abstand zu der Hauptachse (4) um die Hauptachse (4) herum verteilt angeordnet sind, zweckmäßigerweise in einer gleichmäßigen Verteilung.

4. Greifvorrichtung nach einem der Ansprüche 1 bis 3, **dadurch gekennzeichnet, dass** die Schwenkachse (6) jeder schwenkbeweglichen Greifbacke (5) in einer zu der Hauptachse (4) rechtwinkeligen Radialebene (13) verläuft, wobei zweckmäßigerweise die Schwenkachsen (6) sämtlicher schwenkbeweglichen Greifbacken (5) in einer gemeinsamen Radialebene (13) liegen.

5. Greifvorrichtung nach einem der Ansprüche 1 bis 4, **dadurch gekennzeichnet, dass** die Schließ-Kooperationsfläche (36) benachbart zur Schwenkachse (6) am Greifarm (15) der schwenkbaren Greifbacke (5) ausgebildet ist und/oder dass die Schließ-Kooperationsfläche (36) konvex gewölbt ist.

6. Greifvorrichtung nach einem der Ansprüche 1 bis 5, **dadurch gekennzeichnet, dass** die Greiffläche (24) an der der Hauptachse (4) zugewandten Innenfläche (25) des Greifarmes (15) jeder schwenkbeweglichen Greifbacke (5) angeordnet ist.

7. Greifvorrichtung nach einem der Ansprüche 1 bis 6, **dadurch gekennzeichnet, dass** sich die Greifarme (15) der schwenkbeweglichen Greifbacken (5) von der jeweils zugeordneten Schwenkachse (6) weg in Richtung zu einer axialen Vorderseite (8) der Greifvorrichtung (1) erstrecken, wobei der Betätigungsabschnitt (33) des Betätigungsschiebers (27) ringförmig oder rahmenförmig ausgebildet ist und die schwenkbeweglichen Greifarme (15) an ihrer Außenfläche (26) von einer axialen Rückseite (11) der Greifvorrichtung (1) her ein Stückweit axial übergreift, wobei der Betätigungsabschnitt (33) zweckmäßigerweise von einem becherförmigen vorderen Endabschnitt (34) des Betätigungsschiebers (27) gebildet ist.

8. Greifvorrichtung nach einem der Ansprüche 1 bis 7, **dadurch gekennzeichnet, dass** der Betätigungsschieber (27) insgesamt hülsenförmig ausgebildet ist und den Greifbackenträger (3) mit axialer Beweglichkeit koaxial umschließt.

9. Greifvorrichtung nach einem der Ansprüche 1 bis 8, **dadurch gekennzeichnet, dass** die Öffnungs-Kooperationsfläche (43) konkav gewölbt ist.

10. Greifvorrichtung nach einem der Ansprüche 1 bis 9, **dadurch gekennzeichnet, dass** jeder Greifarm (15) einen Antriebsschlitz (37) des Betätigungsschiebers (27) durchsetzt, der zwei sich mit Abstand gegenüberliegende Schlitzflanken (38a, 38b) aufweist, von denen die eine die Schließ-Antriebsfläche (35) und die andere die Öffnungs-Antriebsfläche (42) bildet.

11. Greifvorrichtung nach einem der Ansprüche 1 bis 10, **dadurch gekennzeichnet, dass** der Betätigungsschieber (27) einen jede Schließ-Antriebsfläche (35) aufweisenden Hauptkörper (44) aufweist und pro schwenkbeweglicher Greifbacke (5) über ein an dem Hauptkörper (44) fixiertes Ösenelement (46) verfügt, an dem die zugeordnete Öffnungs-Antriebsfläche (42) ausgebildet ist und das zweckmäßigerweise relativ zu dem Hauptkörper (44) um eine zur Schwenkachse (6) der zugeordneten Greifbacke (5) parallele Achse verschwenkbar ist.

12. Greifvorrichtung nach Anspruch 11, **dadurch gekennzeichnet, dass** das Ösenelement (46) von einem länglichen, bevorzugt federelastisch biegbaren Ringkörper (46a) gebildet ist.

13. Greifvorrichtung nach einem der Ansprüche 1 bis 12, **dadurch gekennzeichnet, dass** jede schwenkbewegliche Greifbacke (5) zur Ermöglichung ihres Verschwenkens einen bevorzugt zumindest partiell kreiszylindrisch konturierten Schwenkachskörper (16) aufweist, mit dem sie in einer Lagerausnehmung (18) des Greifbackenträgers (3) verdrehbar gelagert ist, wobei der Greifarm (15) zweckmäßigerweise einstückig mit dem Schwenkachskörper (16) ausgebildet ist und wobei vorzugsweise die gesamte Greifbacke (5) einstückig ausgebildet ist.

14. Greifvorrichtung nach einem der Ansprüche 1 bis 13, **dadurch gekennzeichnet, dass** jede schwenkbewegliche Greifbacke (5) einen Greifarm (15) mit in seiner Längsrichtung bogenförmig gewölbter Formgebung aufweist und/oder dass jede schwenkbewegliche Greifbacke (5) aus einem Kunststoffmaterial besteht.

15. Greifvorrichtung nach einem der Ansprüche 1 bis 14, **dadurch gekennzeichnet, dass** die vorhandenen schwenkbeweglichen Greifbacken (5) gesondert voneinander ausgebildet sind.

16. Greifvorrichtung nach einem der Ansprüche 1 bis 15, **dadurch gekennzeichnet, dass** sie über eine Antriebseinrichtung (28) zur Erzeugung der Schließ-Betätigungsbewegung (32a) und der Öffnungs-Betätigungsbewegung (32b) des Betätigungsschiebers (27) verfügt, die insbesondere mittels Fluidkraft betätigbar ist.

## Claims

1. Gripping device with a gripping jaw support (3) and several gripping jaws (5) distributed thereon about a main axis (4) of the gripping jaw support (3), wherein at least one of the gripping jaws (5) is a pivotable gripping jaw (5) which is pivotably mounted on the gripping jaw support (3) for pivoting about a pivot axis (6) and which has a gripping arm (15) projecting from the pivot axis (6) on one side and provided with a gripping surface (24) for gripping an object (2), which gripping arm (15) is pivoted radially inwards towards the main axis (4) of the gripping jaw support (3) in a closing pivoting movement (7a) and radially outwards away from the main axis (4) in an opposite opening pivoting movement (7b) of the gripping jaw (5), and with an actuating slide (27) for the actuation of each pivotable gripping jaw (5), which actuating slide (27) is capable of linear displacement in the axial direction of the main axis (4) relative to the gripping jaw support (3) while performing a closing actuating movement (32a) and an opposite opening actuating movement (32b), and which actuating slide (27) has for each pivotable gripping jaw (5) a closing drive surface (35), which in the closing actuating movement (32a) of the actuating slide slides along a closing cooperation surface (36) - inclined relative to the main axis (4) of the gripping jaw support (3) - of the associated pivotable gripping jaw (5), thereby causing the closing pivoting movement (7a) of the pivotable gripping jaw, wherein the closing cooperation surface (36) is located - pointing away from the main axis (4) - on the outer surface (26) of the gripping arm (15) of a respective pivotable gripping jaw (5) which is radially remote from the main axis (4), and wherein the gripping arm (15) is overlapped at its outer surface (26) in the axial direction of the main axis (4) by an actuating section (33) of the actuating slide (27) having the respective closing drive surface (35) on its inside facing the main axis (4), **characterised in that** on the inner surface (25) - facing the main axis (4) - of each pivotable gripping arm (15), there is provided an opening cooperation surface (43), which is inclined relative to the main axis (4) and opposite which radially inwards relative to the main axis (4) is provided an opening drive surface (42), which is located on the actuating slide (27) and points radially outwards, and which slides along the opening cooperation surface (43) of the associated pivotable gripping arm (15) in the opening actuating movement (32b) of the actuating slide (27), thereby causing the opening pivoting movement (7b) of the pivotable gripping arm.

2. Gripping device according to claim 1, **characterised in that** several and expediently all of the gripping jaws (5) are designed as pivotable gripping jaws (5), at least three pivotable gripping jaws (5) being expediently provided.

3. Gripping device according to claim 1 or 2, **characterised in that** the gripping jaws (5) are distributed around the main axis (4) at identical radial distances from the main axis (4), being expediently distributed evenly.

4. Gripping device according to any of claims 1 to 3, **characterised in that** the pivot axis (6) of each pivotable gripping jaw (5) extends in a radial plane (13) perpendicular to the main axis (4), the pivot axes (6) of all pivotable gripping jaws (5) expediently lying in a common radial plane (13).

5. Gripping device according to any of claims 1 to 4, **characterised in that** the closing cooperation surface (36) is formed on the gripping arm (15) of the pivotable gripping jaw (5) adjacent to the pivot axis (6), and/or **in that** the closing cooperation surface (36) has a convex curvature.

6. Gripping device according to any of claims 1 to 5, **characterised in that** the gripping surface (24) is located on the inner surface (25) - facing the main axis (4) - of the gripping arm (15) of each pivotable gripping jaw (5).

7. Gripping device according to any of claims 1 to 6, **characterised in that** the gripping arms (15) of the pivotable gripping jaws (5) extend away from the respectively associated pivot axis (6) towards an axial front side (8) of the gripping device (1), wherein the actuating section (33) of the actuating slide (27) is designed to be annular or frame-shaped and axially overlaps the pivotable gripping arms (15) at their outer surface (26) from an axial rear side (11) of the gripping device (1) to some extent, the actuating section (33) being expediently represented by a beaker-shaped front end section (34) of the actuating slide (27).

8. Gripping device according to any of claims 1 to 7, **characterised in that** the actuating slide (27) as a whole is designed to be sleeve-shaped and coaxially encloses the gripping jaw support (3) with axial movement.

9. Gripping device according to any of claims 1 to 8, **characterised in that** the opening cooperation surface (43) has a concave curvature.

10. Gripping device according to any of claims 1 to 9, **characterised in that** each gripping arm (15) passes through a drive slot (37) of the actuating slide (27), which drive slot (37) has two slot flanks (38a, 38b) located opposite each other at a distance, one of which forms the closing drive surface (35) and the other of which forms the opening drive surface (42).

11. Gripping device according to any of claims 1 to 10, **characterised in that** the actuating slide (27) has a main body (44) with each closing drive surface (35) and is provided for each pivotable gripping jaw (5) with an eyelet element (46), which is secured to the main body (44), and on which the associated opening drive surface (42) is formed, and which is expediently pivotable about an axis which is parallel to the pivot axis (6) of the associated gripping jaw (5).

12. Gripping device according to claim 11, **characterised in that** the eyelet element (46) is represented by an oblong, preferably spring-elastic, annular body (46a).

13. Gripping device according to any of claims 1 to 12, **characterised in that** each pivotable gripping jaw (5) has, for facilitating its pivoting, a pivot axis body (16), which is preferably contoured at least partially as a circular cylinder and with which it is rotatably mounted in a bearing recess (18) of the gripping jaw support (3), wherein the gripping arm (15) is expediently formed integrally with the pivot axis body (16), and wherein the whole gripping jaw (5) is preferably designed as a single piece.

14. Gripping device according to any of claims 1 to 13, **characterised in that** each pivotable gripping jaw (5) has a gripping arm (15) with an arcuate contouring in its longitudinal direction, and/or **in that** each pivotable gripping jaw (5) is made of a plastic material.

15. Gripping device according to any of claims 1 to 14, **characterised in that** the pivotable gripping jaws (5) provided are designed separately from one another.

16. Gripping device according to any of claims 1 to 15, **characterised in that** it has a drive device (28) for generating the closing actuating movement (32a) and the opening actuating movement (32b) of the actuating slide (27), which drive device (28) is in particular operated by means of fluid power.

## Revendications

1. Dispositif de préhension, avec un support de mors (3) et plusieurs mors (5) qui y sont répartis autour d'un axe principal (4) du support de mors (3), dans lequel au moins un des mors (5) est un mors (5) mobile en pivotement logé de manière pivotante autour d'un axe de pivotement (6) au niveau du support de mors (3), qui présente un bras de préhension (15) s'éloignant d'un côté de l'axe de pivotement (6) et doté d'une surface de préhension (24) servant à la préhension d'un objet (2), qui est pivoté lors d'un mouvement de pivotement de fermeture (7a) du mors (5) radialement vers l'intérieur en direction de l'axe principal (4) du support de mors (3) et lors d'un mouvement de pivotement d'ouverture (7b) opposé du mors (5) à l'opposé de l'axe principal (4) radialement vers l'extérieur, et avec un coulisseau d'actionnement (27) pour l'actionnement de chaque mors mobile en pivotement (5), qui, lors de la réalisation d'un mouvement d'actionnement de fermeture (32a) et d'un mouvement d'actionnement d'ouverture (32b) opposé à celui-ci, est linéairement coulissant respectivement par rapport au support de mors (3) en direction axiale de l'axe principal (4) et qui présente une surface d'entraînement de fermeture (35) pour chaque mors mobile en pivotement (5), qui lors de son mouvement d'actionnement de fermeture (32a) glisse le long d'une surface de coopération de fermeture (36) du mors mobile en pivotement (5) associé inclinée par rapport à l'axe principal (4) du support de mors (3) et entraîne ainsi son mouvement de pivotement de fermeture (7a), dans lequel la surface de coopération de fermeture (36) est agencée à l'opposé de l'axe principal (4) au niveau de la surface extérieure (26) du bras de préhension (15) d'un mors mobile en pivotement (5) concerné radialement opposée à l'axe principal (4) et le bras de préhension (15) est recouvert au niveau de sa surface extérieure (26) en direction axiale de l'axe principal (4) par une section d'actionnement (33) du coulisseau d'actionnement (27) présentant la surface d'entraînement de fermeture (35) concernée au niveau de son côté intérieur tourné vers l'axe principal (4), **caractérisé en ce qu'**une surface de coopération d'ouverture (43) inclinée par rapport à l'axe principal (4) est agencée au niveau de la surface intérieure (25) tournée vers l'axe principal (4) de chaque bras de préhension mobile en pivotement (15), à laquelle fait face par rapport à l'axe principal (4) radialement à l'intérieur une surface d'entraînement d'ouverture (42) agencée au niveau du coulisseau d'actionnement (27) et dirigée radialement vers l'extérieur, qui lors du mouvement d'actionnement d'ouverture (32b) du coulisseau d'actionnement (27) glisse le long de la surface de coopération d'ouverture (43) du bras de préhension mobile en pivotement (15) associé et entraîne ainsi son mouvement de pivotement d'ouverture (7b).

2. Dispositif de préhension selon la revendication 1, **caractérisé en ce que** plusieurs et de manière appropriée tous les mors (5) sont réalisés en tant que mors mobiles en pivotement (5), dans lequel de manière appropriée au moins trois mors (5) pivotants sont présents.

3. Dispositif de préhension selon la revendication 1 ou 2, **caractérisé en ce que** les mors (5) sont répartis autour de l'axe principal (4) à distance radiale égale les uns des autres par rapport à l'axe principal (4), de manière appropriée dans une répartition régulière.

4. Dispositif de préhension selon l'une quelconque des revendications 1 à 3, **caractérisé en ce que** l'axe de pivotement (6) de chaque mors mobile en pivotement (5) s'étend dans un plan radial (13) perpendiculaire à l'axe principal (4), dans lequel de manière appropriée les axes de pivotement (6) de tous les mors mobiles en pivotement (5) se trouvent dans un plan radial commun (13).

5. Dispositif de préhension selon l'une quelconque des revendications 1 à 4, **caractérisé en ce que** la surface de coopération de fermeture (36) est réalisée de manière adjacente à l'axe de pivotement (6) au niveau du bras de préhension (15) du mors pivotant (5) et/ou que la surface de coopération de fermeture (36) est courbée de manière convexe.

6. Dispositif de préhension selon l'une quelconque des revendications 1 à 5, **caractérisé en ce que** la surface de préhension (24) est agencée au niveau de la surface intérieure (25) tournée vers l'axe principal (4) du bras de préhension (15) de chaque mors mobile en pivotement (5).

7. Dispositif de préhension selon l'une quelconque des revendications 1 à 6, **caractérisé en ce que** les bras de préhension (15) des mors mobiles en pivotement (5) s'étendent à l'opposé de l'axe de pivotement (6) respectivement associé en direction d'un côté avant axial (8) du dispositif de préhension (1), dans lequel la section d'actionnement (33) du coulisseau d'actionnement (27) est réalisée en forme d'anneau ou en forme de cadre et recouvre un peu axialement les bras de préhension mobiles en pivotement (15) au niveau de leur surface extérieure (26) depuis un côté arrière axial (11) du dispositif de préhension (1), dans lequel la section d'actionnement (33) est formée de manière appropriée par une section d'extrémité (34) avant en forme de gobelet du coulisseau d'actionnement (27).

8. Dispositif de préhension selon l'une quelconque des revendications 1 à 7, **caractérisé en ce que** le coulisseau d'actionnement (27) est réalisé en particulier en forme de douille et entoure coaxialement le support de mors (3) avec mobilité axiale.

9. Dispositif de préhension selon l'une quelconque des revendications 1 à 8, **caractérisé en ce que** la surface de coopération d'ouverture (43) est courbée de manière concave.

10. Dispositif de préhension selon l'une quelconque des revendications 1 à 9, **caractérisé en ce que** chaque bras (15) traverse une fente d'entraînement (37) du coulisseau d'actionnement (27), qui présente deux flancs de fente (38a, 38b) se faisant face à distance, dont l'un forme la surface d'entraînement de fermeture (35) et l'autre la surface d'entraînement d'ouverture (42).

11. Dispositif de préhension selon l'une quelconque des revendications 1 à 10, **caractérisé en ce que** le coulisseau d'actionnement (27) présente un corps principal (44) présentant chaque surface d'entraînement de fermeture (35) et dispose d'un élément d'oeillet (46) fixé au corps principal (44) par mors mobile en pivotement (5), au niveau duquel la surface d'entraînement d'ouverture (42) associée est réalisée et qui est pivotant de manière appropriée par rapport au corps principal (44) autour d'un axe parallèle à l'axe de pivotement (6) du mors (5) associé.

12. Dispositif de préhension selon la revendication 11, **caractérisé en ce que** l'élément d'oeillet (46) est formé par un corps annulaire (46a) allongé, de préférence élastiquement flexible.

13. Dispositif de préhension selon l'une quelconque des revendications 1 à 12, **caractérisé en ce que** chaque mors mobile en pivotement (5) présente pour permettre son pivotement un corps d'axe de pivotement (16) à contour de préférence au moins partiellement cylindrique circulaire, avec lequel il est logé en rotation dans un évidement de palier (18) du support de mors (3), dans lequel le bras de préhension (15) est réalisé de manière appropriée d'un seul tenant avec le corps d'axe de pivotement (16) et dans lequel l'ensemble du mors (5) est réalisé de préférence d'un seul tenant.

14. Dispositif de préhension selon l'une quelconque des revendications 1 à 13, **caractérisé en ce que** chaque mors mobile en pivotement (5) présente un bras de préhension (15) avec une forme courbée en arc dans sa direction longitudinale et/ou que chaque mors mobile en pivotement (5) se compose d'un matériau plastique.

15. Dispositif de préhension selon l'une quelconque des revendications 1 à 14, **caractérisé en ce que** les mors mobiles en pivotement (5) présents sont réalisés de manière séparée les uns des autres.

16. Dispositif de préhension selon l'une quelconque des revendications 1 à 15, **caractérisé en ce qu'**il dispose d'un dispositif d'entraînement (28) pour la génération du mouvement d'actionnement de fermeture (32a) et du mouvement d'actionnement d'ouverture (32b) du coulisseau d'actionnement (27), qui est actionnable en particulier au moyen de la force d'un fluide.
